(19) Europäisches Patentamt European Patent Office Office européen des brevets

(11) **EP 3 287 738 B1**

(12) **EUROPEAN PATENT SPECIFICATION**

(45) Date of publication and mention
of the grant of the patent:
**03.06.2020 Bulletin 2020/23**

(51) Int Cl.:
**G01B 21/00** (2006.01)    **B60M 1/28** (2006.01)

(21) Application number: **16783069.4**

(86) International application number:
**PCT/JP2016/061855**

(22) Date of filing: **13.04.2016**

(87) International publication number:
**WO 2016/171048 (27.10.2016 Gazette 2016/43)**

(54) **METHOD AND APPARATUS FOR ESTIMATING WEAR OF TROLLEY WIRE**

VERFAHREN UND VORRICHTUNG ZUR KALKULATION DES VERSCHLEISSES EINES OBERLEITUNGSDRAHTES

PROCÉDÉ ET APPAREIL PERMETTANT D'ESTIMER L'USURE D'UN FIL CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2015 JP 2015086405**

(43) Date of publication of application:
**28.02.2018 Bulletin 2018/09**

(73) Proprietor: **Meidensha Corporation Tokyo 141-6029 (JP)**

(72) Inventors:
• **HAYASHI, Takanori**
  **Tokyo 141-6029 (JP)**
• **NIWAKAWA, Makoto**
  **Tokyo 141-6029 (JP)**
• **TABAYASHI, Seiji**
  **Tokyo 141-6029 (JP)**

(74) Representative: **Strehl Schübel-Hopf & Partner Maximilianstrasse 54 80538 München (DE)**

(56) References cited:
**WO-A1-2011/036728**    **WO-A1-2014/115902**
**JP-A- 2003 329 431**    **JP-A- 2009 014 633**

• **T.USUDA ET AL.: 'Prediction of Contact Wire Wear in High-speed Railways' 9TH WORLD CONGRESS ON RAILWAY RESEARCH, [Online] 22 May 2011, XP055323791 Retrieved from the Internet: <URL:http://www.railway-research.org/IMG/ pdf/e3_usuda_takayuki.pdf> [retrieved on 2016-06-21]**

**Description**

TECHNICAL FIELD

The present invention relates to a trolley-wire wear estimation method and apparatus, and specifically to a measured-data analysis.

BACKGROUND ART

In Patent Document 1 and other patent documents, wear (remaining diameter) of a trolley wire is measured via image measurement, and management is performed to prevent the actually measured value from exceeding a threshold value.
Also, in Non-Patent Document 1, wear (remaining diameter) is measured with a laser measurement apparatus or the like, and management is performed in a similar manner.
Further wear estimation methods for trolley wires related to the present invention are disclosed in JP 2003 329431 A and JP 2009 014633 A.

PRIOR ART DOCUMENT

PATENT DOCUMENT

Patent Document 1: Japanese Patent Application Publication No. 2014-159971 (wear measuring device and method for same)

NON-PATENT DOCUMENT

Non-Patent Document 1: " Analysis of Data Measured by Electric Inspection Car for Predicting Wear of Trolley Wire", 2018 IEE-Japan Industry Applications Society Conference, 5-17

SUMMARY OF THE INVENTION

PROBLEMS TO BE SOLVED BY THE INVENTION

However, if the measurement interval is as short as several months, the progress of the wear is small, and it is not uncommon for the remaining diameter to indicate a time-series increase due to measurement errors. Since the progress of the wear is estimated from such data, Non-Patent Document 1 avoids the reversal by using the difference between points separated by a year and a half interval, and corrects positional displacement by taking a moving average in the positional direction.
However, the measurement errors are so large in the first place that the reversal will occur even if an average is taken on a drum basis (a drum is a single, integrated piece of trolley wire and, on average, has a length of approximately 1 km per drum). Therefore, even if the above is performed, the reversal cannot be completely avoided. Thus, a filtering condition (the wear value is 0 if the actually measured value is less than or equal to a threshold value) is set.
The present invention aims to provide an apparatus for and a method of performing proper wear estimation from measured values having large errors as above.

MEANS FOR SOLVING THE PROBLEMS

The trolley-wire wear estimation method and the trolley-wire wear estimation apparatus of the present invention are defined in the respective independent claims. Further advantageous features are set out in the dependent claims.

EFFECT OF THE INVENTION

From a measured value of the remaining diameter measured on each of measurement days, an estimated value of the remaining diameter and a wear rate are estimated by constructing an optimization problem. In this way, it is possible to calculate a proper estimate value and wear rate even if the measured value fluctuates due to an error.

BRIEF DESCRIPTION OF THE DRAWINGS

[Fig. 1] Fig. 1 is a block diagram of a trolley-wire wear estimation apparatus of the present invention.
[Fig. 2] Fig. 2 is a graph illustrating time-series changes of estimated values of remaining diameter and wear rates.
[Fig. 3] Fig. 3 is a block diagram of the estimation apparatus.

MODES FOR CARRYING OUT THE INVENTION

A measured value of the remaining diameter of a trolley wire measured on each of measurement days refers to the value of the wear (remaining diameter) of the trolley wire measured at the same position on each of multiple measurement days. Each measured value may be a value from a position corrected in the measurement, or a processed statistical value obtained via averaging within a certain positional range.

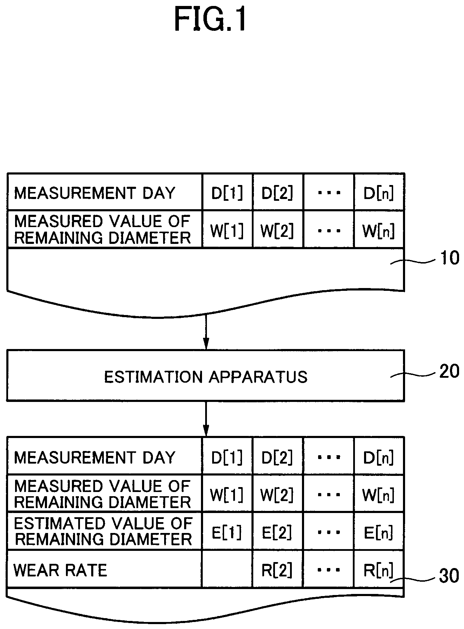

As illustrated in Fig. 1, the present invention uses an estimation apparatus 20 on a sequence of measured values 10 to estimate proper estimated values and wear rates as the time-series change of the remaining diameter, and outputs them as an estimation result 30.

Specifically, the sequence of measured values 10 are constituted of measured values W[1], W[2], ..., W[n] of the remaining diameter measured on measurement days D[1], D[2], ..., D[n], respectively. The measured values are acquired by, for example, imaging the lower surface of the trolley wire, which wears by contacting a pantograph, with a camera installed on the roof of a train, as in Patent Document 1.

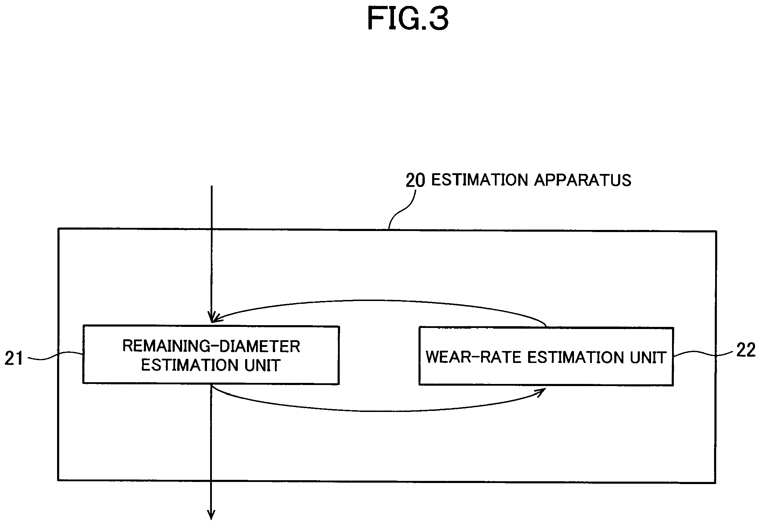

The estimation apparatus 20 estimates estimated values of the remaining diameter and the wear rates on measurement days based on the sequence of measured values 10 of the remaining diameter measured on the measurement days, and includes a remaining-diameter estimation unit 21 and a wear-rate estimation unit 22, as illustrated in Fig. 3. The estimation apparatus 20 may be implemented by installing software onto a computer.

The estimation result 30 is a sequence obtained by adding estimated values E[1], E[2], ..., E[n] of the remaining diameter and wear rates R[2], ..., R[n] to the measured values W[1], W[2], ..., W[n] of the remaining diameter on the measurement days D[1], D[2], ..., D[n]. Each wear rate represents the change of the estimated value of the remaining diameter over the interval between measurement days. For this reason, the wear rate does not exist for the first day and exists for the second and following days.

The remaining-diameter estimation unit 21 estimates the remaining diameter by constructing and solving an optimization problem that minimizes an objective function described in equation (1) under the following constraints. The optimization problem will be described later. There are two constraints which are that the wear rate is greater than or equal to 0, and the estimated value of the remaining diameter is greater than or equal to a lower limit value obtained by subtracting an error value $\varepsilon$ from the measured value of the remaining diameter.

The wear-rate estimation unit 22 calculates each wear rate based on estimated values, as indicated by equation (2).

Note that in practice, instead of having the remaining-diameter estimation unit 21 calculate the remaining diameter via optimization and then the wear-rate estimation unit 22 calculate the wear rate, the estimated value of the remaining diameter and the estimated value of the wear rate are simultaneously estimated in an iterative manner in the course of optimization, like the two curved arrows given in Fig. 3 between the remaining-diameter estimation unit 21 and the wear-rate estimation unit 22. Specifically, to solve the optimization problem, the remaining diameter and the wear rate are simultaneously estimated via iterative processing involving estimating the wear rate based on an estimated value of the remaining diameter to calculate the objective function, and estimating the remaining diameter again based on it.

[Math. 3]
Objective Function:

$$T = \sum_{k=3}^{n}(R[k] - R[k-1])^2 + \alpha \sum_{k=1}^{n}(E[k] - L[k])$$

... (1)

Constraints:

$R[k] \geq 0$
: $E[k] \geq L[k]$

where

R[k]: the wear rate in the k-th measurement
E[k]: the estimated value of the remaining diameter in the k-th measurement
L[k] = W[k] - ε : the lower limit value of the remaining diameter in the k-th measurement
ε : the error value assumed to be contained in the measured value

$$R[k] = -C \frac{E[k]-E[k-1]}{D[k]-D[k-1]}, \ k = 2, \cdots, n \qquad \dots (2)$$

where

C : a coefficient converting the wear rate (C = **365.25** in a case of conversion into an annualized rate)
R[k] : the wear rate in the k-th measurement
E[k] : the estimated value of the remaining diameter in the k-th measurement
D[k] : the calendar date of the measurement day of the k-th measurement (the difference is the number of days in the measurement interval)

The optimization problem can be solved with, for example, a solver that can be added as an add-in to Microsoft Excel (trade name by Microsoft Corporation) or the like. The solver is one function for spreadsheet software, and refers to a function capable of calculating optimal values of multiple variables contained in a numerical equation for obtaining a target value. The solver can calculate optimal values of the multiple variables by determining the correlation between the variables while changing the variables. The solver can also set a particular constraint on a given variable, and make a particular variable hold the largest value and the smallest value by changing the values of the other variables.
The following is complementary description of the objective function.
The objective function essentially serves to reduce the time-series change of the wear rate, and further its second term is added as a constraint relaxation term to make it less likely for the estimated value to exceed the upper limit.
In the case of the present problem, the essential objective function is only the first term

[Math. 4]

$$\sum_{k=3}^{n}(R[k] - R[k-1])^2$$

and it is proper for the second term

[Math. 5]

$$\sum_{k=1}^{n}(E[k] - L[k])$$

to be essentially the following constraint.
[Math. 6]

$$E[k] \leq U[k] \qquad \dots\dots (3)$$

U[k] = W[k] + ε : the upper limit value of the remaining diameter in the k-th measurement
However, in the case of the present problem, there is often no solution satisfying the constraint (3). Since the problem cannot be solved in this state, appropriate weighting is used to obtain an alleviated condition as below.

[Math. 7]

$$T = \sum_{k=3}^{n}(R[k] - R[k-1])^2 + \alpha \sum_{k=1}^{n} max(E[k] - U[k], 0)$$

Further, since this alleviated approach is somewhat likely to result in a constraint violation, it is changed as follows for the purpose of intensifying the constraint.

[Math. 8]

$$T = \sum_{k=3}^{n}(R[k] - R[k-1])^2 + \alpha \sum_{k=1}^{n} max(E[k] - L[k], 0)$$

max (a,b) means the larger of a and b.

The final equation has the following constraint.

[Math. 9]

$$E[k] \geq L[k]$$

Hence, the second term will never be less than or equal to 0. Thus, max can be omitted, so that

[Math. 10]

$$T = \sum_{k=3}^{n}(R[k] - R[k-1])^2 + \alpha \sum_{k=1}^{n}(E[k] - L[k])$$

is obtained.

EMBODIMENT 1

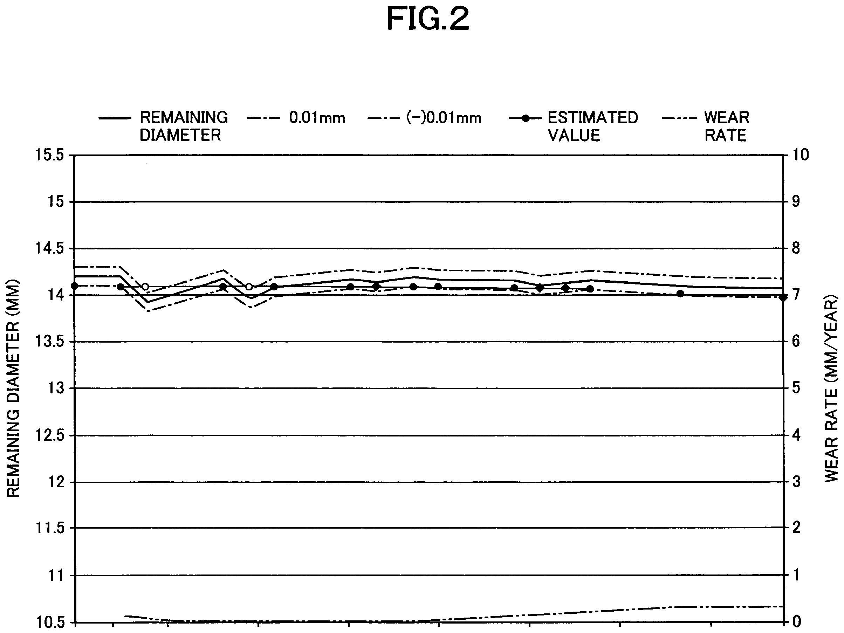

Fig. 2 illustrates, in the form of a graph, time-series changes of the estimated value of the remaining diameter and the wear rate estimated by the present invention.

In this instance, parameters are set such that C = 365.25, $\alpha$ = 1, and $\varepsilon$ = 0.01 mm, and the shift of the remaining diameter is estimated by utilizing the data of 16 measurements.

In Fig. 2, the remaining diameter (measured value) is illustrated by a solid line, the upper limit value (0.01) and the lower limit value (-0.01) relative to the remaining diameter are illustrated by chain lines, and the wear rate is illustrated by a two-dot chain line.

As illustrated by o, the measured value is abnormally small at the points at which the estimated value is outside the range of $\pm$0.01 mm from the measured value, which are the third and fifth points. On the other hand, as illustrated by ●, estimated values that are proper as a whole are selected at the other points, i.e., the points at which the estimated value is within the range of $\pm$0.01 mm from the measured value. The graph also indicates that the shift of the wear rate is proper.

Specifically, as illustrated by the narrow line connecting ● and ○, a proper result is obtained in which the estimated value gradually decreases toward the right side in Fig. 2, i.e. with the elapse of time. Likewise, estimation of the wear rate based on the estimated value leads to a proper result in which the wear rate gradually increases toward the right side in Fig. 2, i.e. with the elapse of time.

EMBODIMENT 2

This embodiment relates to correction of the wear rate by the surface area of contact of the overhead wire (trolley wire).

The first term of the objective function in the above-described embodiment 1 minimizes the change of the wear rate. This asserts that the wear rate is constant (as long as no external condition changes).

However, while the trolley wire is new, the width of contact between the trolley wire and a pantograph is small, and the wear therefore progresses faster when considered based on the remaining diameter. In other words, the wear rate is not constant.

Thus, this is corrected in this embodiment by using a wear rate based on the remaining surface area, instead of the wear rate based on the remaining diameter. The remaining surface area can be calculated from the remaining diameter as long as the cross-sectional shape of the trolley wire is known.

Specifically, the "remaining diameter" in math. 3 in embodiment 1 is replaced with the "remaining surface area". Then, based on a sequence of calculated values of the remaining surface area on measurement days, estimated values of the remaining surface area and wear rates on the measurement days are estimated. In Fig. 3, a remaining surface area estimator is provided in place of the remaining-diameter estimation unit 21. The wear-rate estimation unit 22 calculates the wear rate based on the estimated values of the remaining surface area.

INDUSTRIAL APPLICABILITY

The present invention is widely industrially applicable as a trolley-wire wear estimation method and a trolley-wire wear estimation apparatus.

EXPLANATION OF THE REFERENCE NUMERALS

10     sequence of measured values
20     estimation apparatus
21     remaining-diameter estimation unit
22     wear-rate estimation unit
30     estimation result

**Claims**

1.  A trolley-wire wear estimation method of estimating wear of a trolley wire, the trolley-wire wear estimation method comprising:

based on a measured value $W[k]$ of remaining diameter of the trolley wire measured on a k-th measurement day, calculating an estimated value $E[k]$ of the remaining diameter by solving an optimization problem that minimizes the objective function T in equation (1) under the following constraints; and
estimating a wear rate by using equation (2),

wherein the objective function is:

$$T = \sum_{k=3}^{n}(R[k] - R[k-1])^2 + \alpha \sum_{k=1}^{n}(E[k] - L[k]); \text{ and} \qquad (1)$$

the constraints are:

$R[k] \geq 0$
$E[k] \geq L[k]$

where

$$R[k] = -C\frac{E[k]-E[k-1]}{D[k]-D[k-1]}, \ k = 2, \cdots, n \qquad (2)$$

is the wear rate in the k-th measurement;

$\alpha$ is a weighting parameter;
$E[k]$ is the estimated value of the remaining diameter in the k-th measurement;
$L[k] = W[k] - \varepsilon$ is a lower limit value of the remaining diameter in the k-th measurement;
$\varepsilon$ is an error value assumed to be contained in the measured value;
$C$ is a coefficient converting the wear rate such as $C = 365.25$ in the case of conversion into an annualized rate; and
$D[k]$ is the calendar date of the measurement day of the k-th measurement such that the difference $D[k]$-$D[k-1]$ is the number of days in a measurement interval.

2.  The trolley-wire wear estimation method according to claim 1, wherein the trolley-wire wear estimation method uses a calculated value of remaining surface area of the trolley wire in place of the measured value $W[k]$ of the remaining diameter of the trolley wire.

3. A trolley-wire wear estimation apparatus for estimating wear of a trolley wire, comprising:

a remaining-diameter estimation unit (21) adapted to calculate, based on a measured value $W[k]$ of remaining diameter of the trolley wire measured on a k-th measurement day, an estimated value $E[k]$ of the remaining diameter by solving an optimization problem that minimizes the objective function T in equation (1) under the following constraints; and
a wear-rate estimation unit (22) adapted to estimate a wear rate by using equation (2),

wherein the objective function is:

$$T = \sum_{k=3}^{n}(R[k] - R[k-1])^2 + \alpha \sum_{k=1}^{n}(E[k] - L[k]); \text{ and} \qquad (1)$$

the constraints are:

$R[k] \geq 0$
$E[k] \geq L[k]$

where

$$R[k] = -C\frac{E[k]-E[k-1]}{D[k]-D[k-1]}, \quad k = 2, \cdots, n \qquad (2)$$

is the wear rate in the k-th measurement;

$\alpha$ is a weighting parameter;
$E[k]$ is the estimated value of the remaining diameter in the k-th measurement;
$L[k] = W[k] - \varepsilon$ is a lower limit value of the remaining diameter in the k-th measurement;
$\varepsilon$ is an error value assumed to be contained in the measured value;
$C$ is a coefficient converting the wear rate such as $C = 365.25$ in the case of conversion into an annualized rate; and
$D[k]$ is the calendar date of the measurement day of the k-th measurement such that the difference $D[k]$-$D[k-1]$ is the number of days in a measurement interval.

4. The trolley-wire wear estimation apparatus according to claim 3, wherein the trolley-wire wear estimation apparatus (21) is adapted to use a calculated value of remaining surface area of the trolley wire in place of the measured value $W[k]$ of the remaining diameter of the trolley wire.

**Patentansprüche**

1. Fahrdrahtverschleiß-Schätzverfahren zum Schätzen des Verschleißes eines Fahrdrahts, wobei das Fahrdrahtverschleiß-Schätzverfahren umfasst:

Berechnen, auf der Grundlage eines gemessenen Wertes $W[k]$ eines an einem k-ten Messtag gemessenen verbleibenden Durchmessers des Fahrdrahts, eines geschätzten Wertes $E[k]$ des verbleibenden Durchmessers durch Lösen eines Optimierungsproblems, das die Zielfunktion T in Gleichung (1) unter den folgenden Nebenbedingungen minimiert; und
Schätzen einer Verschleißrate unter Verwendung von Gleichung (2),
wobei die Zielfunktion ist:

$$T = \sum_{k=3}^{n}(R[k] - R[k-1])^2 + \alpha \sum_{k=1}^{n}(E[k] - L[k]); \text{ und} \qquad (1)$$

die Nebenbedingungen sind:

$R[k] \geq 0$
$E[k] \geq L[k]$

wobei

$$R[k] = -C \frac{E[k]-E[k-1]}{D[k]-D[k-1]}, \quad k = 2, \cdots, n \qquad (2)$$

die Verschleißrate in der k-ten Messung ist;

$\alpha$ ein Wichtungsparameter ist;

$E[k]$ der geschätzte Wert des verbleibenden Durchmessers in der k-ten Messung ist;

$L[k] = W[k] - \varepsilon$ ein unterer Grenzwert des verbleibenden Durchmessers in der k-ten Messung ist;

$\varepsilon$ ein Fehlerwert ist, der als im gemessenen Wert enthalten angenommen wird;

$C$ ein die Verschleißrate umwandelnder Koeffizient wie etwa $C$ = 365,25 im Falle der Umwandlung in eine jährliche Rate ist; und

$D[k]$ das Kalenderdatum des Messtags der k-ten Messung ist, so dass die Differenz $D[k]$-$D[k$-1] die Anzahl von Tagen in einem Messintervall ist.

2. Fahrdrahtverschleiß-Schätzverfahren nach Anspruch 1, wobei das Fahrdrahtverschleiß-Schätzverfahren einen berechneten Wert des verbleibenden Oberflächeninhalts des Fahrdrahts anstelle des gemessenen Wertes $W[k]$ des verbleibenden Durchmessers des Fahrdrahts verwendet.

3. Fahrdrahtverschleiß-Schätzvorrichtung zum Schätzen des Verschleißes eines Fahrdrahts, umfassend:

eine Schätzeinheit (21) für den verbleibenden Durchmesser, die dazu ausgelegt ist, auf der Grundlage eines gemessenen Wertes $W[k]$ des an einem k-ten Messtag gemessenen verbleibenden Durchmessers des Fahrdrahts einen geschätzten Wert $E[k]$ des verbleibenden Durchmessers durch Lösen eines Optimierungsproblems zu berechnen, dass die Zielfunktion T in Gleichung (1) unter den folgenden Nebenbedingungen minimiert; und eine Verschleißratenschätzeinheit (22), die dazu ausgelegt ist, eine Verschleißrate unter Verwendung von Gleichung (2) zu schätzen,

wobei die Zielfunktion ist:

$$T = \sum_{k=3}^{n}(R[k] - R[k-1])^2 + \alpha \sum_{k=1}^{n}(E[k] - L[k]); \text{ und} \qquad (1)$$

die Nebenbedingungen sind:

$R[k] \geq 0$
$E[k] \geq L[k]$

wobei

$$R[k] = -C \frac{E[k]-E[k-1]}{D[k]-D[k-1]}, \quad k = 2, \cdots, n \qquad (2)$$

die Verschleißrate in der k-ten Messung ist;

$\alpha$ ein Wichtungsparameter ist;

$E[k]$ der geschätzte Wert des verbleibenden Durchmessers in der k-ten Messung ist;

$L[k] = W[k] - \varepsilon$ ein unterer Grenzwert des verbleibenden Durchmessers in der k-ten Messung ist;

$\varepsilon$ ein Fehlerwert ist, der als im gemessenen Wert enthalten angenommen wird;

$C$ ein die Verschleißrate umwandelnder Koeffizient wie etwa $C$ = 365,25 im Falle der Umwandlung in eine jährliche Rate ist; und

$D[k]$ das Kalenderdatum des Messtags der k-ten Messung ist, so dass die Differenz $D[k]$-$D[k$-1] die Anzahl von Tagen in einem Messintervall ist.

4. Fahrdrahtverschleiß-Schätzvorrichtung nach Anspruch 3, wobei die Fahrdrahtverschleiß-Schätzvorrichtung (21) dazu ausgelegt ist, einen berechneten Wert eines verbleibenden Oberflächeninhalts des Fahrdrahts anstelle des gemessenen Werts W[k] des verbleibenden Durchmessers des Fahrdrahts zu verwenden.

**Revendications**

1.  Procédé d'estimation de l'usure d'un fil conducteur pour estimer l'usure d'un fil conducteur, le procédé d'estimation de l'usure d'un fil conducteur comprenant :

    sur la base d'une valeur mesurée W[k] du diamètre restant du fil conducteur mesuré un k-ème jour de mesure, le calcul d'une valeur estimée E[k] du diamètre restant en résolvant un problème d'optimisation qui minimise la fonction objective T dans l'équation (1) sous les contraintes suivantes ; et
    l'estimation d'un taux d'usure en utilisant l'équation (2),

    dans laquelle la fonction objective est :

    $$T = \sum_{k=3}^{n}(R[k] - R[k-1])^2 + \alpha \sum_{k=1}^{n}(E[k] - L[k]) \quad ; \text{ et } (1)$$

    les contraintes sont :

    $R[k] \geq 0$
    $E[k] \geq L[k]$

    où

    $$R[k] = -C\frac{E[k]-E[k-1]}{D[k]-D[k-1]}, \quad k = 2, \cdots, n \quad (2)$$

    est le taux d'usure dans la k-ème mesure ;
    $\alpha$ est un paramètre de pondération ;
    E[k] est la valeur estimée du diamètre restant dans la k-ème mesure ;
    L[k]=W[k] - $\varepsilon$ est une valeur limite inférieure du diamètre restant dans la k-ème mesure ;
    $\varepsilon$ est une valeur d'erreur supposée être contenue dans la valeur mesurée ;
    C est un coefficient convertissant le taux d'usure tel que C = 365,25 dans le cas d'une conversion en taux annualisé ; et
    D[k] est la date calendaire du jour de mesure de la k-ème mesure, de telle sorte que la différence D[k]-D[k-1] est le nombre de jours dans un intervalle de mesure.

2.  Procédé d'estimation de l'usure d'un fil conducteur selon la revendication 1, dans lequel le procédé d'estimation de l'usure d'un fil conducteur utilise une valeur calculée de la surface restante du fil conducteur à la place de la valeur mesurée W[k] du diamètre restant du fil conducteur.

3.  Appareil d'estimation de l'usure d'un fil conducteur pour estimer l'usure d'un fil conducteur, comprenant :

    une unité d'estimation du diamètre restant (21) adaptée pour calculer, sur la base d'une valeur mesurée W[k] du diamètre restant du fil conducteur mesuré un k-ème jour de mesure, une valeur estimée E[k] du diamètre restant par la résolution d'un problème d'optimisation qui minimise la fonction objective T dans l'équation (1) sous les contraintes suivantes ; et
    une unité d'estimation du taux d'usure (22) adaptée pour estimer un taux d'usure en utilisant l'équation (2),

    dans laquelle la fonction objective est :

    $$T = \sum_{k=3}^{n}(R[k] - R[k-1])^2 + \alpha \sum_{k=1}^{n}(E[k] - L[k]) \quad ; \text{ et } (1)$$

    les contraintes sont :

$R[k] \geq 0$

$E[k] \geq L[k]$

où

$$R[k] = -C\frac{E[k]-E[k-1]}{D[k]-D[k-1]}, \quad k = 2, \cdots, n \qquad (2)$$

est le taux d'usure dans la k-ème mesure ;

$\alpha$ est un paramètre de pondération ;

$E[k]$ est la valeur estimée du diamètre restant dans la k-ème mesure ;

$L[k]=W[k]-\varepsilon$ est une valeur limite inférieure du diamètre restant dans la k-ème $L[k]=W[k] - \varepsilon$ est une valeur limite inférieure du diamètre restant dans la k-ème mesure ;

$\varepsilon$ est une valeur d'erreur supposée être contenue dans la valeur mesurée ;

$C$ est un coefficient convertissant le taux d'usure tel que $C$ = 365,25 dans le cas d'une conversion en taux annualisé ; et

$D[k]$ est la date calendaire du jour de mesure de la k-ème mesure, de telle sorte que la différence $D[k]-D[k-1]$ est le nombre de jours dans un intervalle de mesure.

4. Appareil d'estimation de l'usure d'un fil conducteur selon la revendication 3, dans lequel l'appareil d'estimation de l'usure d'un fil conducteur (21) est adapté pour utiliser une valeur calculée de la surface restante du fil conducteur à la place de la valeur mesurée $W[k]$ du diamètre restant du fil conducteur.

# FIG.1

| MEASUREMENT DAY | D[1] | D[2] | ・・・ | D[n] |
|---|---|---|---|---|
| MEASURED VALUE OF REMAINING DIAMETER | W[1] | W[2] | ・・・ | W[n] |

~ 10

ESTIMATION APPARATUS ~ 20

| MEASUREMENT DAY | D[1] | D[2] | ・・・ | D[n] |
|---|---|---|---|---|
| MEASURED VALUE OF REMAINING DIAMETER | W[1] | W[2] | ・・・ | W[n] |
| ESTIMATED VALUE OF REMAINING DIAMETER | E[1] | E[2] | ・・・ | E[n] |
| WEAR RATE | | R[2] | ・・・ | R[n] |

~ 30

# FIG.2

EP 3 287 738 B1

Legend: REMAINING DIAMETER (solid line), 0.01mm (dash-dot), (−)0.01mm (dash-dot), ESTIMATED VALUE (●), WEAR RATE (dash-dot)

# FIG.3

20 ESTIMATION APPARATUS

21 — REMAINING-DIAMETER ESTIMATION UNIT

WEAR-RATE ESTIMATION UNIT — 22

EP 3 287 738 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003329431 A
- JP 2009014633 A

- JP 2014159971 A

**Non-patent literature cited in the description**

- Analysis of Data Measured by Electric Inspection Car for Predicting Wear of Trolley Wire. *2018 IEE-Japan Industry Applications Society Conference,* 5-17